# FASCICULE DE BREVET EUROPEEN

(11) **EP 1 542 924 B1**
(45) Date de publication et mention de la délivrance du brevet: **01.02.2006**
(21) Numéro de dépôt: 03769563.2
(22) Date de dépôt: 03.09.2003
(51) Int. Cl.: C01B 17/16

(54) **PROCEDE DE PURIFICATIN D UN GAZ DE SYNTHESE A BASE DE SULFUR E DHYDROGENE**
REINIGUNG VON H2S DURCH PORÖSE TRÄGER
METHOD FOR PURIFYING HYDROGEN SULPHIDE ON POROUS SUPPORTS

(30) Priorité: 06.09.2002 FR 0211156
(43) Date de publication de la demande: 22.06.2005
(73) Titulaire: Arkema, 92800 Puteaux (FR)
(72) Inventeur: LE BEC, Rémi, F-64170 Labastide Cezeracq (FR)
(74) Mandataire: Ohresser, François
(86) Numéro de dépôt international: PCT/FR2003/002638
(87) Numéro de publication internationale: WO 2004/022482

(56) Documents cités:
- BE-A- 352 419
- US-A- 2 474 066
- US-A- 5 173 285

## Description

La présente invention concerne la production industrielle du sulfure 5 d'hydrogène (H₂S), gaz de synthèse obtenu par la réaction de l'hydrogène et du soufre liquide.

Cette réaction pratiquée dans une installation ou un appareil industriel est abondamment décrite dans la littérature notamment US 5 173 285, GB 1 193 040, US 4 404 180, US 4 629 617, JP 05 067 562, WO 8 200 632, GB 1600227, US 4 094 961.

Cette production industrielle consiste en général à faire réagir de l'hydrogène gazeux avec du soufre à l'état liquide à une température d'environ 400 à 450°C dans un réacteur surmonté d'une colonne de reflux du soufre. Le gaz sortant en tête de colonne est ensuite refroidi dans un ou plusieurs condenseurs où l'on récupère du soufre par solidification.

La Demanderesse a observé que, dans une installation du type ci-dessus, le gaz à 30°C en sortie du condenseur peut contenir encore des impuretés conduisant, sans la mise en oeuvre d'une post-réaction, au dépôt dans le reste de l'installation d'au moins 100 mg de soufre par kilogramme de H₂S produit.

Ce dépôt de soufre solide peut entraîner le bouchage des canalisations en aval du condenseur conduisant à l'arrêt de la production de H₂S pour nettoyer les canalisations bouchées.

Ce dépôt correspond à une pseudo-tension de vapeur saturante au moins 10 fois plus élevée que la tension de vapeur saturante du soufre pur à cette même température de 30°C. Cette pseudo-tension de vapeur s'explique par la présence de sulfanes H₂Sₓ, x étant un nombre entier égal ou supérieur à 2.

Les sulfanes sont rapportés dans le "Nouveau Traité de Chimie minérale, Paul Pascal, Tome XIII, 1960 pages 1108-1124.

Récemment, 1. Winder et V. Meyn ont publié, dans Ind. Eng. Chem.Res. 1996, 35, 1257-1262, une étude expérimentale de la cinétique de formation et de décomposition des sulfanes dans le système Soufre/H₂S.

Les documents US 5 173 285 et GB 1 193 040 traitent du problème des sulfanes ou du "soufre vapeur" n'ayant pas réagi et apportent tous les deux le même type de solution technique, à savoir une post-réaction du gaz, issu de la réaction H2 et du soufre liquide, par de l'hydrogène gazeux en léger excès, à une température de l'ordre de 200° à 350°C en présence éventuellement d'un catalyseur cobalt-molybdène, nickel-molybdène ou sulfure de nickel.

Dans cette post-réaction, le soufre restant et/ou les sulfanes sont transformés en sulfure d'hydrogène selon :

S et/ou H₂Sₓ + H₂ → H₂S

En effet les sulfanes, et a fortiori le soufre, sont des espèces chimiques moins hydrogénées que le sulfure d'hydrogène.

L'objet de la présente invention est de trouver une autre solution technique, simple à mettre en oeuvre, pour éviter le bouchage des canalisations.

Ce but est atteint par un procédé de purification d'un gaz de synthèse contenant en majorité du sulfure d'hydrogène H₂S et obtenu par la réaction de l'hydrogène et du soufre liquide dans un appareil industriel, caractérisé en ce que l'on fait passer ce gaz dans un filtre contenant un solide choisi parmi des grains poreux de charbon actif, d'alumine, de silice.

Le gaz purifié en sortie du filtre a dans ces conditions une aptitude diminuée ou même inexistante à déposer du soufre solide dans ledit appareil.

L'avantage des grains poreux réside dans le fait qu'ils se saturent en soufre et/ou composés soufrés à l'intérieur de leur pores, évitant ainsi le colmatage par le soufre des espaces vides entre les grains. Ainsi l'épuration du gaz industriel n'entraîne pas de perte de charge notable avant la saturation des pores des grains.

De préférence les grains poreux sont du charbon actif.

En effet, un tel charbon est capable de retenir par adsorption dans ses pores jusqu'à 70 % de son poids initial en composés soufrés, calculés en poids de soufre (masse moléculaire égale à 32 g). Une telle capacité d'adsorption est d'autant plus avantageuse sur un plan industriel qu'elle permet de limiter ou même d'éviter une phase de régénération. De plus, le charbon activé est facilement disponible et conduit à un procédé ayant un coût diminué.

Par ailleurs, après utilisation, le charbon usagé contenant des produits soufrés peut être incinéré totalement et être ainsi transformé en CO₂, SO₂ et H₂O.

Tout charbon actif peut être mis en oeuvre notamment celui issu du bois, de la houille, de la tourbe, de la coque de noix de coco.

Avantageusement, le filtre contient également un matériau adsorbant l'eau sélectivement par rapport à l'hydrogène sulfuré, notamment un tamis moléculaire de type 3Å. Ce matériau, en desséchant le sulfure d'hydrogène permet d'éviter ensuite les problèmes de corrosion dans le reste de l'installation.

Généralement, la température opérationnelle du solide poreux est de 0 à 200°C, de préférence 0° à 100°C.

Généralement, la pression à l'intérieur du filtre va de 1 à 100 bars absolus et de préférence de 1 à 10 bars absolus.

Avantageusement, le temps de contact du gaz de synthèse avec le solide poreux va de 0,1 seconde(s) à 5 minutes, de préférence de 1s à 30s.

Avantageusement, la vitesse linéaire du gaz de synthèse dans le filtre va de 0,01 m/s à 2 m/s, de préférence de 0,02 m/s à 0,1 m/s.

En plus de la description précédente, la partie expérimentale suivante permet de mieux comprendre la présente invention. Les exemples sont donnés à titre illustratif.

### Partie expérimentale

Le filtre contenant le charbon actif est soumis à un courant de gaz, soit de synthèse, soit ayant une pureté pondérale de 99,7% en H₂S, pendant une durée déterminée. Le filtre est ensuite isolé du courant gazeux, puis avec les précautions d'usage, purgé à l'azote à une température allant de 20 à 100°C, pour en chasser l'H₂S. Malgré cette purge, il peut y avoir des dégagements ultérieurs de composés soufrés.

Le sens de traversée du filtre définissant une entrée et une sortie, on réalise des prélèvements de charbon actif à des emplacements espacés régulièrement depuis l'entrée jusqu'à la sortie, à l'intérieur du filtre.

La mesure du soufre des échantillons de charbon ainsi prélevés est faite en déterminant le soufre total par micro-analyse.

L'échantillon est soumis à une combustion totale en présence d'oxygène ; les composés soufrés sont transformés en SO₂ puis en H₂SO₄ par oxydation par le peroxyde d'hydrogène et enfin dosés par coulométrie selon E. Debal et R. Levy, Bull. Soc. Chim. Fr N° 68 (1), pp.426-434,1967.

Les résultats sont rapportés en g de soufre pour 100 g de charbon actif initial (avant adsorption des produits soufrés).

### Exemple 1

On dispose d'un gaz de synthèse (sous une pression de 4 bars) contenant pour l'essentiel de l'H₂S issu de la synthèse soufre + hydrogène. Ce gaz passe par un condenseur qui ramène sa température à 30°C. Son débit est de 0,5 tonne/heure ou 75 m³/heure.

On fait passer ce gaz au travers d'un filtre cylindrique de révolution de 23 cm de diamètre interne et 50 cm de longueur interne. Ce filtre est rempli de 8 kg de charbon actif ACTICARBONE® AC 35 de la Société française CECA.

Ce charbon actif se présente sous forme de petits cylindres de 4 mm de diamètre. Sa surface spécifique BET est d'au moins 1000 m²/g.

Au bout de 8 h de filtration, on isole le filtre et on le soumet à la procédure exposée ci-dessus pour analyser le gradient de sa teneur en produits soufrés. Les prélèvements de charbon se font dans les différentes couches du lit espacées de 10 cm selon la longueur du filtre. Les résultats sont présentés dans le tableau suivant.

**TABLEAU I**

| **Endroit du prélèvement en cm** | **Entrée** 0 | 10 | 20 | 30 | 40 | **Sortie** 50 |
|---|---|---|---|---|---|---|
| **Teneur en soufre total en g pour 100g de charbon initial neuf** | 34 | 24 | 1 | 1 | 1 | 1 |

### Exemple 2

On répète à l'identique l'exemple 1 avec du charbon actif neuf mais en triplant la durée de filtration (24 h). Les résultats figurent dans le tableau II suivant:

**TABLEAU II**

| **Endroit du prélèvement en cm** | **Entrée** 0 | 10 | 20 | 30 | 40 | **Sortie** 50 |
|---|---|---|---|---|---|---|
| **Teneur en soufre total en g pour 100g de charbon initial neuf** | 44 | 41 | 4 | 1 | 1 | 1 |

### Exemple 3

Les conditions de l'exemple 1 sont à l'identique sauf la durée de filtration qui est de 56 h. Les résultats figurent dans le tableau III suivant:

**TABLEAU III**

| **Endroit du prélèvement en cm** | **Entrée** 0 | 10 | 20 | 30 | 40 | **Sortie** 50 |
|---|---|---|---|---|---|---|
| **Teneur en soufre total en g pour 100g de charbon initial neuf** | 70 | 54 | 24 | 2 | 2 | 1 |

L'examen des exemples 1 à 3 montre que le charbon retient sélectivement le soufre et les sulfanes contenus dans le gaz de synthèse et qu'il possède une affinité nettement plus faible pour H₂S.

Dans le procédé suivant l'invention, on peut utiliser une batterie de deux ou plusieurs filtres, de façon à basculer le courant de gaz à purifier sur un filtre neuf dès que le filtre en utilisation atteint une certaine quantité cumulée de gaz l'ayant traversé. Cette quantité qui dépend également du charbon actif utilisé et de sa masse mise en oeuvre est déterminée sur la base d'exemples analogues aux exemples 1 à 3 précédents.

## Revendications

1. Procédé de purification d'un gaz de synthèse contenant en majorité du sulfure d'hydrogène H₂S et obtenu par la réaction de l'hydrogène et du soufre liquide dans un appareil industriel, **caractérisé en ce que** l'on fait passer ce gaz dans un filtre contenant un solide choisi parmi des grains poreux de charbon actif, d'alumine, de silice.

2. Procédé suivant la revendication 1, **caractérisé en ce que** les grains sont du charbon actif.

3. Procédé suivant la revendication 1, **caractérisé en ce que** le filtre contient également un matériau adsorbant l'eau sélectivement par rapport à l'hydrogène sulfuré.

4. Procédé suivant la revendication 3, **caractérisé en ce que** le matériau est un tamis moléculaire du type 3Å.

## Claims

1. A method for purifying a synthesis gas containing a majority of hydrogen sulfide H₂S and obtained by the reaction of hydrogen with liquid sulfur in an industrial apparatus, **characterized in that** the gas is passed through a filter containing a solid selected from porous grains of activated charcoal, alumina or silica.

2. The method as claimed in claim 1, **characterized in that** the grains are made of activated charcoal.

3. The method as claimed in claim 1, **characterized in that** the filter also contains a material that adsorbs water selectively with respect to hydrogen sulfide.

4. The method as claimed in claim 3, **characterized in that** the material is a type 3Å molecular sieve.

## Patentansprüche

1. Verfahren zur Reinigung eines überwiegend Schwefelwasserstoff H₂S enthaltenden und durch Umsetzung von Wasserstoff und flüssigem Schwefel in einer technischen Vorrichtung erhaltenen Synthesegases, **dadurch gekennzeichnet, daß** man dieses Gas durch einen Filter, der einen unter porösen Körnern von Aktivkohle, Aluminiumoxid und Siliciumdioxid ausgewählten Feststoff enthält, leitet.

2. Verfahren nach Anspruch 1, **dadurch gekennzeichnet, daß** die Körner aus Aktivkohle sind.

3. Verfahren nach Anspruch 1, **dadurch gekennzeichnet, daß** das Filter außerdem ein in bezug auf Schwefelwasserstoff selektiv wasserabsorbierendes Material enthält.

4. Verfahren nach Anspruch 3, **dadurch gekennzeichnet, daß** des sich bei dem Material um ein 3Ä-Molsieb handelt.
